Europäisches Patentamt

**European Patent Office**

**Office européen des brevets**

(11) Publication number : **0 515 167 A2**

## (12) EUROPEAN PATENT APPLICATION

(21) Application number : **92304567.8**

(22) Date of filing : **20.05.92**

(51) Int. Cl.⁵ : **B32B 31/12,** B65D 5/42, B05C 1/10

(30) Priority : **20.05.91 GB 9110872**

(43) Date of publication of application :
**25.11.92 Bulletin 92/48**

(84) Designated Contracting States :
**AT BE CH DE DK ES FR GB GR IT LI LU NL SE**

(71) Applicant : **TENZA LIMITED**
**Carlton Park Industrial Estate**
**Saxmundham, Suffolk IP17 2NL (GB)**

(72) Inventor : **Marjoram, Robert, c/o TENZA**
**LIMITED**
**Carlton Park Industrial Estate**
**Saxmundham, Suffolk IP17 2NL (GB)**
Inventor : **Macleod, Roland, c/o TENZA**
**LIMITED**
**Carlton Park Industrial Estate**
**Saxmundham, Suffolk IP17 2NL (GB)**

(74) Representative : **March, Gary Clifford**
**Batchellor, Kirk & Co. 2 Pear Tree Court**
**Farringdon Road**
**London EC1R 0DS (GB)**

(54) **Laminating process and apparatus and use thereof.**

(57) The present invention provides forming means for producing a laminated article comprising at least five adjacent layers including :

(i) a first plastics film layer (1) which is transparent or translucent,

(ii) a partial adhesive layer (21, 22) which comprises an adhesive border surrounding an adhesive-free region, the adhesive forming a relatively strong bond between layers adjacent it,

(iii) a second plastics film layer (4),

(iv) a secondary adhesive layer (24) adjacent and applied to said second plastics film layer (4), and

(v) a layer (25) of release material adjacent said secondary adhesive layer (24) and fastened thereto by relatively weak bond to be capable of release therefrom,

said partial adhesive layer comprising a set, hot melt adhesive and the said adhesive border defining an air-space between the layers adjacent it.

Apparatus is disclosed to be useful in the production of e.g. packing list envelopes in a process which can avoid the discontinuity associated with heat welding utilised in conventional production techniques for packing list envelopes.

FIG.1.

EP 0 515 167 A2

This invention is concerned with laminate forming means, such as a means for forming packing-list envelopes, methods for their production and laminated articles, such as packing-list envelopes obtainable by the apparatus and methods.

In conventional manufacturing processes for producing packing-list envelopes (which are in essence a multi-layered laminate comprising plastics films, a bond between plastics films, an adhesive layer and a release layer), the bond between adjacent layers of plastics films is formed by a heat weld during the production process. This entails the supply of primary and secondary layers to be laminated, to a heat-sealing station whereby momentarily the travel of such layers is interrupted to bring the layers into contact with the heat sealing station to create a heat welded bond between the plastics films which are comprised within the primary and secondary layers.

In consequence, the speed of production of the laminate is rate-determined by the heat-welding processing step. Although primary and secondary layers to be laminated can be continuously fed from suitable supply stations, tensioning devices are generally employed to take up slack which would otherwise be present prior to the heat-welding step.

The conventional manufacturing process for laminates such as packing-list envelopes is therefore non-continuous and it is from a consideration of this limiting step in the conventional manufacturing system that has led to the development of the present invention.

It has now been surprisingly found that, an alternative bond-formation means can be deployed within the manufacturing apparatus to enable production of the laminated articles on a continuous basis. As a result, the speeds of production of laminated articles can be considerably improved from about 20 metres/minute for conventional production facilities, to production speeds approaching 100 metres per minute utilising the apparatus and method according to the present invention. It will be appreciated that such is a considerable increase in the magnitude of the production speed.

According to this invention there is provided, in a first aspect, a laminate forming means comprising a primary supply station adapted to feed continuously a primary layer comprising a transparent or translucent plastics film, a primary guide means adapted to locate the primary layer within a predetermined travel path for that layer, a secondary supply station adapted to feed continuously a secondary layer which includes a surface of plastics material, a secondary guide means adapted to locate the secondary layer within a predetermined travel path for that layer, adhesive application means stationed adjacent the travel path of said primary or secondary layer and adapted to apply continuously, in use, adhesive to a plastics surface of said primary or secondary layer in an array which is determined by the configuration of one or more adhesive outlets in said application means, laminate forming means adapted to bring together continuously during travel said primary and secondary layers such that the adhesive coated plastics surface of the primary or secondary layer is brought into engagement with the adjacent surface of the other layer, permitting the applied adhesive to bond together said adjacent surfaces to form continuously a laminated layer, the laminated layer continuing along a travel path to cutting means which can cut the laminated layer to a required shape or size.

In a second aspect the invention also provides a method of forming an adhesively bonded laminated layer which comprises supplying continuously and guiding a primary layer which comprises a transparent or translucent plastics film along a predetermined travel path, supplying continuously and guiding a secondary layer which includes a surface of plastics material along a predetermined travel path for that layer, applying adhesive continuously to a plastics surface of the primary or secondary layer such that an array of adhesive is applied to said surface which array is determined by the configuration of one or more adhesive outlets in means capable of supplying said adhesive, forming continuously a laminate of said primary and secondary layers during travel thereof by bringing into engagement the adhesive coated plastics surface of the primary or secondary layer with the surface of the other layer adjacent thereto and subsequently cutting the laminated layer to a required shape or size.

The present invention further provides in a third aspect, a laminated article comprising at least five adjacent layers including:

(i) a first plastics film layer which is transparent or translucent,

(ii) a partial adhesive layer which comprises an adhesive border surrounding an adhesive-free region, the adhesive forming a relatively strong bond between layers adjacent it,

(iii) a second plastics film layer,

(iv) a secondary adhesive layer adjacent and applied to said second plastics film layer, and

(v) a layer of release material adjacent said secondary adhesive layer and fastened thereto by relatively weak bond to be capable of release therefrom,

said partial adhesive layer comprising a set, hot melt adhesive and the said adhesive border defining an airspace between the layers adjacent it.

In accordance with the above aspects of the invention the primary layer may comprise a first plastics film layer of e.g. low density polyethylene (LDPE). Whilst translucent or transparent, this layer can be optionally printed or patterned with information and/or art work which may identify the eventual laminated product or its contents.

The hot melt adhesive is preferably one which is known to be suitable for bonding filmic polyolefins. Such adhesive is preferably a thermoplastic rubber based pressure sensitive grade. Acrylic type such rubber based thermoplatic adhesive has been found to work well and is thus preferred. These preferred adhesives are known to be particularly suitable for bonding 'untreated' low density polyethylene (LDPE) film to other substrates.

The primary and secondary layers can be of blown LDPE film. The untreated surface for receiving the adhesive is preferably that surface which has not been roughened or pitted by corona discharge or other surface roughening technique. If surface roughening of the film is used, it is preferably for the uppermost surface of the primary layer, being that surface which may be, if desired, pre-printed with information or pre-patterned with artwork. Alternatively, and as explained hereafter, the roughened surface of the primary layer may be subjected to printing and/or patterning as part of the present lamination process, thereby avoiding the need for separate equipment to pre-print and/or pre-pattern the uppermost surface of the primary layer, before loading of the primary layer to the primary supply station.

The primary layer may be pre-printed before the lamination step or it may be subjected to a printing step in the present apparatus or method either pre- or post-lamination. This optimal feature, if introduced, brings with it additional advantages such as the possibility of avoiding a separate printing or inking production process in the formation of the primary layer, before that layer is subsequently deployed in the manufacture of e.g. packing-list envelopes.

The secondary layer may comprise an initial laminate of a second plastics film layer, an adhesive layer applied thereto and a release layer e.g. silicone coated paper already applied to said second plastics film layer and releasable therefrom to expose the adhesive layer for application of the finished, laminated product, e.g. packing list envelopes, to the intended goods.

Primary and secondary guide means may comprise suitably located rollers for locating the primary and secondary layers along their respective predetermined travel paths.

Preferably the laminate according to the third aspect of the present invention is produced on a laminate forming means according to the first aspect of the invention, as operated by a method as defined in the second aspect of the present invention.

It is preferred that in the adhesive application means, a hot-melt adhesive is applied to the respective plastics film layer and in an array which corresponds to a repeating rectangle. Such an array is generally in accordance with the existing array of the heat-welded bond between plastics film layers in conventional packing-list envelopes.

In the present laminate forming means, method and laminated products, the plastics film of the first and/or second layer may be rendered more retentive of the applied hot melt adhesive, when such is used, by making the surface to which the adhesive is to be applied or the other surface brought into contact therewith during lamination, slightly rough or pitted. This can be achieved by a corona-discharge being applied to the respective surface whereby the applied adhesive establishes a good and sufficient bond to resist unwanted or undesired removal.

In order that the invention, in all its aspects, may be illustrated, reference is now made to the accompanying drawings, illustrating embodiments by way of example only and in which;

Figure 1 is a schematic illustration of laminate-forming apparatus suitable for the production of packing-list envelopes,

Figure 2 is a preferred arrangement of the adhesive array as applied to a surface of the respective plastics film layer, as determined by the adhesive outlet in the adhesive application means, and

Figure 3 is an exploded, cross-sectional view of a packing-list envelope laminate.

Although the drawing illustrates a direct transfer of adhesive from the screen roller to the secondary layer, which is itself a laminate, an alternative embodiment which is not illustrated deploys an indirect transfer application of adhesive, by means of intermediate rollers. Such could be used to apply adhesive to either primary layer, or secondary layer.

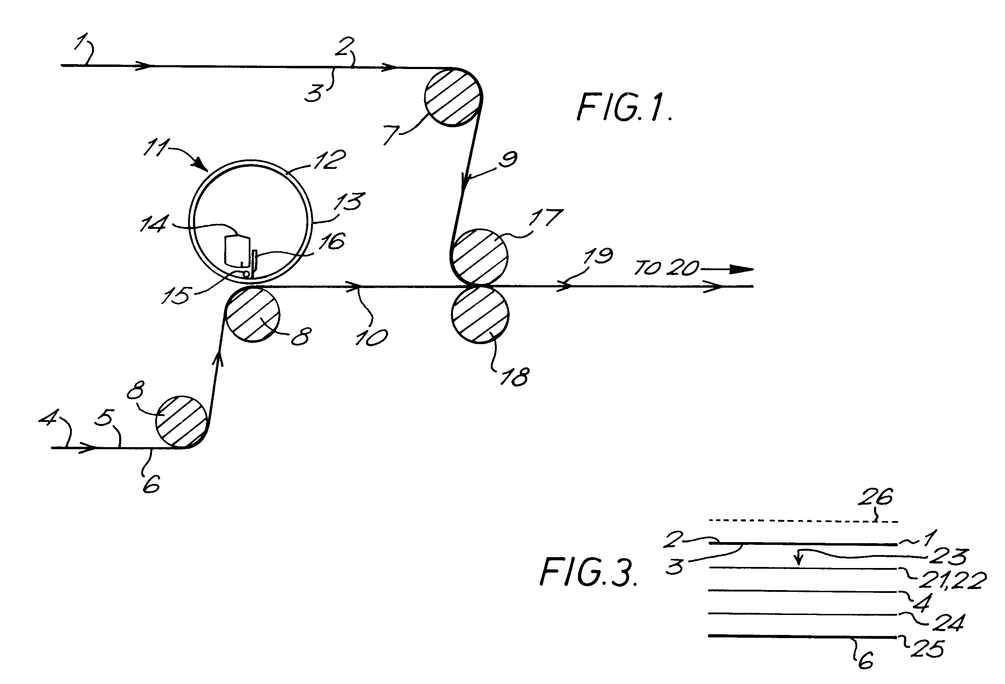

Referring to Figure 1, a primary layer comprising an optionally-printed plastics film layer has been supplied from a primary supply station (not shown) continuously along its predetermined travel path 9, guided by a primary guide roller 7 and a first laminating roller 17 whereafter the film continues as a laminate along a travel path 19 for that laminate to cutting means 20 (not shown).

The first plastics film layer has an uppermost surface 2 and an under surface 3, the latter being the surface which is caused to adhere to the secondary layer. The primary layer is transparent or translucent so that any contents in the finished laminates can be viewed through the primary layer.

A secondary layer 4 comprises an initial laminate of a plastics film layer 5, at its upper surface, and a release layer 6 at its under surface, such as silicone coated release paper. The release layer 6 is releasably held to the adjacent plastics film layer 5 by means of an adhesive layer, which can be exposed for application to the intended goods by peeling off the release layer. The secondary layer is guided over secondary guiding means comprising a pair of guide rollers 8 whereby said layer travels along its predetermined travel path 10 until it encounters the laminating rollers 17 and 18. Thereafter, it travels, as a laminate, along the travel path 19 to the cutting means 20.

Stationed adjacent one of the secondary guide rollers 8 there is provided adhesive application means 11. The adhesive application means comprises a rotary screen adapted to apply in predetermined array, a suitable quantity of hot melt adhesive to a surface of one of the plastics film layers. Although in the illustrated embodiment the adhesive application means is applying adhesive to the upper surface 5 of the secondary layer 4, it would be possible to construct an arrangement whereby the adhesive is applied to the under surface 3 of the primary layer 1.

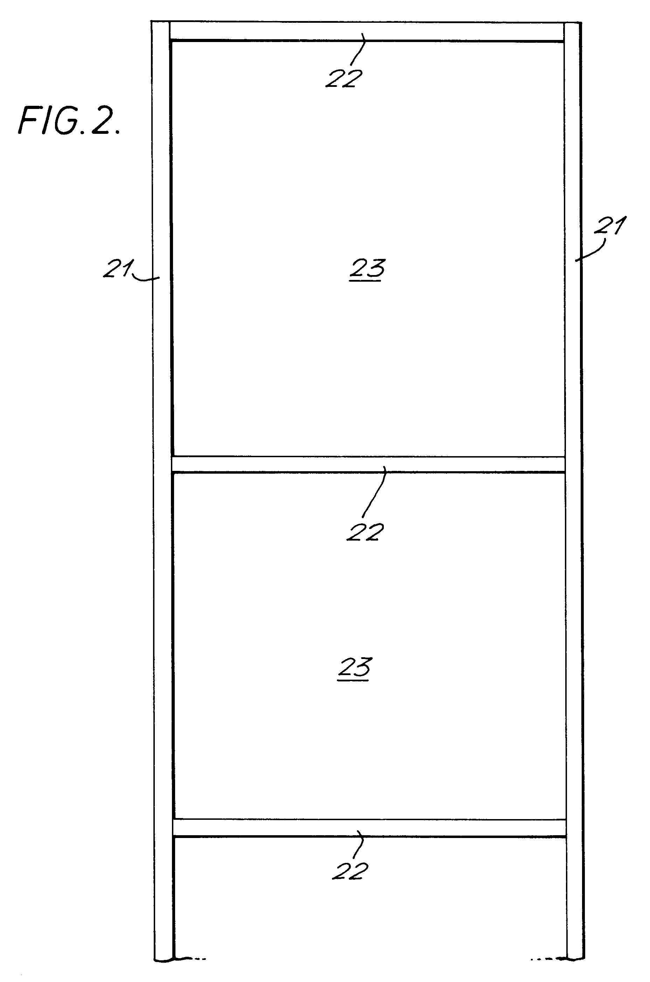

The rotary screen 12 is in the form of a generally hollow drum and its adhesive outlet pattern 13 determines the adhesive array applied through that outlet. The adhesive outlet 13 preferably consists of a plurality of perforations (whose size determined adhesive flow) extending from the interior of the screen to its exterior. Hot melt adhesive is maintained in or otherwise supplied to a reservoir 14 and subsequently caused to be applied to the interior surface of the screen at 15, where it is discharged through those perforations in the outlet 13 by means of a blade 16 positioned adjacent the interior surface of the screen 12 and which is maintained stationary whilst the screen 12 rotates. The outline shape of adhesive shown in Figure 2 corresponds to the pattern of the outlet 13 on the screen 12. Hence the screen pattern determines the shape and configuration of the adhesive array applied to the secondary layer (or to the primary layer in alternative embodiments which are not illustrated). A preferred pattern is that of a continuous rectangular border as shown in Figure 2.

The adhesive array (e.g., acrylic thermoplastic rubber-based; pressure sensitive grade) is applied to the upper surface 5 of the second layer, which is effectively the plastics film layer e.g. low density polyethylene (LDPE), although polypropylene film may serve as an alternative. The hot melt adhesive remains sufficiently tacky along the predetermined travel path 10 of the second layer at least until it reaches the laminate forming means which comprise the pair of oppositely located laminating rollers 17 and 18. Between these rollers, the primary layer is brought into intimate contact with the secondary layer to cause or permit the hot melt adhesive to set whereby the material leaving the laminating rollers is a finished laminate, ready for subsequent cutting at the cutting means 20 (not shown) to the required shape and/or size.

The cutting means 20, although not illustrated, may comprise slitting means which continuously slit the laminated film to required width and lateral cutting means which cut strips to required length. In the production of packing-list envelopes in accordance with the description of this preferred embodiment, an additional slit is made into the secondary layer to form an opening giving access to the interior of the formed laminate. With such an opening, material such as documents and the like can be inserted into an air space in the laminated packing list envelope, the air space being defined by the set hot melt adhesive border and the adjacent layers of plastics films.

Feeding of the primary and secondary layers, to the lamination means can be arranged to run continuously, throughout a production run. In this fashion the adhesive application means 11 also operates continuously, avoiding the stop-start operation associated with the previous heat welding bonding operation, thereby allowing faster production speeds.

In order that the laminated material may be readily cut to required shape and/or size, also on a continuous basis, a rotary guillotine can be included as part of the cutting means 20 (not shown) which can be operated in conjunction with convention or continuous slitting apparatus as is well known in the art.

As an example of adhesive application means 11, it is possible to incorporate a hot melt adhesive application means in the form of a MICRO PRINT PATTERN PRO rotary screen and applicator, as manufactured and produced by Lockwood Technical Inc., a U.S.A. Company. The pattern for the adhesive outlet 13 can be modified to take the form as shown generally in outline in Figure 2 i.e. essential a continuous repeat of rectangles, the shape and size of which is previously determined for that required in the laminated envelopes to be produced.

In an embodiment of the invention which is not illustrated, there is included as part of the apparatus means adapted to over print the upper most layer 2 of the primary layer 1. Such printing can be by convention or such printing apparatus, to operate on a continuous basis and in line with the laminating apparatus. In this regard the printing means can apply a required print or information to the said upper said primary layer after unwinding of that layer from its supply means, or after guiding thereof by the primary guide means or possibly after formation of the laminate, after passage of the layers through the laminate forming means. Such an arrangement can eliminate the need to apply the required print or information to the primary layer before loading that primary layer on to the primary supply means. Hitherto that has required a separate and additional production operation and its incorporation within the present apparatus can being further benefits in the overall time and cost involved in production of laminated packing-list envelopes.

Finally Figure 3 illustrates in cross-section, an exploded view of a laminate in accordance with the third aspect of this invention. The primary layer 1 is of LDPE being translucent or transparent. It has an upper surface 2 which may bear an option or layer 26 of printed matter and/or coloured matter to any required shape or size. The under surface of the primary layer 1 is designated 3 and is brought into contact with the secondary layer 4 in a laminate-forming step. The secondary layer 4 is also of LDPE and this may be coloured or have a colouring added thereto e.g. white pigment. The upper surface of this component in the secondary layer 4 is designated 5 and has applied thereto a set hot melt adhesive border 21, 22 and 23 which corresponds in outline to the longitudinal and lateral lines shown in Figure 2.

An air space 23 is formed between film layers 1 and 4 and bounded by the adhesive border 21, 22. This is to contain e.g. documents when a slit is made to create an envelope, such as a packing-list envelope.

The layer 4 is an initial laminate of the film layer 5, an adhesive layer 24 and a release layer 25 of silicone treated paper which corresponds to the under surface 6 of the said secondary layer. The release layer can be peeled away from its adjacent adhesive as in conventional packing list envelopes.

## Claims

1. Laminate forming means comprising a primary supply station adapted to feed continuously a primary layer comprising a transparent or translucent plastics film, a primary guide means adapted to locate the primary layer within a predetermined travel path for that layer, a secondary supply station adapted to feed continuously a secondary layer which includes a surface of plastics material, a secondary guide means adapted to locate the secondary layer within a predetermined travel path for that layer, adhesive application means stationed adjacent the travel path of said primary or secondary layer and adapted to apply continuously, in use, adhesive to a plastics surface of said primary or secondary layer in an array which is determined by the configuration of one or more adhesive outlets in said application means, laminate forming means adapted to bring together continuously during travel said primary and secondary layers such that the adhesive coated plastics surface of the primary or secondary layer is brought into engagement with the adjacent surface of the other layer, permitting the applied adhesive to bond together said adjacent surfaces to form continuously a laminated layer, the laminated layer continuing along a travel path to cutting means which can cut the laminated layer to a required shape or size.

2. Laminate forming means as claimed in claim 1, adapted to produce packing-list envelopes and in which the primary supply station is loaded with material comprising a first plastics film layer of low density polyethylene (LDPE).

3. Laminate forming means as claimed in claim 1 or 2, in which prior to loading the primary supply station, the primary layer has been pre-printed or otherwise pre-patterned with information and/or art work.

4. Laminate forming means as claimed in claim 2 or 3 in which the secondary supply station is loaded with a laminate which comprises a second plastics film layer, an adhesive layer adjacent and applied to said second plastics film layer, and a layer of release material fastened to said adhesive layer to be capable of subsequent release therefrom.

5. Laminate forming means as claimed in any preceding claim, including means adapted to print artwork and/or apply information to the primary layer during conveyance through the means.

6. Laminate forming means as claimed in any preceding claim in which the hot melt adhesive is applied to the primary or secondary layers by means of a rotary perforated screen including internally located means for supply said hot melt adhesive, and a stationary blade to discharge said adhesive through the perforations of said screen.

7. Laminate forming means as claimed in claim 6 in which said screen is substantially in the form of a hollow drum and perforated in an array which corresponds to a rectangle which perforations are capable of applying adhesive in a pattern of repeating rectangles.

8. Laminate forming means as claimed in any preceding claim in which either or both first layers has a surface which has been pitted or otherwise roughened.

9. Laminate forming means as claimed in any preceding claim in which the adhesive is a hot melt adhesive.

10. Laminate forming means as claimed in claim 9 in which the adhesive is a rubber based thermoplastic, pressure sensitive type.

11. A method of forming an adhesively bonded laminated layer which comprises supplying continuously and guiding a primary layer which comprises a transparent or translucent plastics film along a predetermined travel path, supplying continuously and guiding a secondary layer which includes a surface of plastics material along a predetermined travel path for that layer, applying adhesive continuously to a plastics surface of the primary or secondary layer such that an array of adhesive is applied to said surface which array is determined by the configuration of one or more adhesive outlets in means capable of supplying said adhesive, forming continuously a laminate of said primary and secondary layers during travel thereof by bringing into engagement the adhesive coated plastics surface of the primary or secondary layer with the surface of the other layer adjacent thereto and subsequently cutting the laminated layer to a required shape or size.

12. Use of laminate forming means as claimed in any one of claims 1 to 10, in a method as claimed in claim 11.

13. A laminated article comprising at least five adjacent layers including:

(i) a first plastics film layer which is transparent or translucent,

(ii) a partial adhesive layer which comprises an adhesive border surrounding an adhesive-free region, the adhesive forming a relatively strong bond between layers adjacent it,

(iii) a second plastics film layer,

(iv) a secondary adhesive layer adjacent and applied to said second plastics film layer, and

(v) a layer of release material adjacent said secondary adhesive layer and fastened thereto by relatively weak bond to be capable of release therefrom,

said partial adhesive layer comprising a set adhesive and the said adhesive border defining an air-space between the layers adjacent it.

14. Use of laminate forming means as claimed in any one of claims 1 to 10, in the production of a laminate as claimed in claim 13.

FIG.1.

FIG.3.

FIG.2.